# EUROPEAN PATENT SPECIFICATION

(11) **EP 0 463 747 B1**
(45) Date of publication and mention of the grant of the patent: **08.04.1998**
(21) Application number: 91304939.1
(22) Date of filing: 31.05.1991
(51) Int. Cl.: B32B 27/30, B05D 1/36

(54) **Coated plastic molded articles and processes for their preparation**
Geformter Kunststoffgegenstand mit einem Bezug und Verfahren zu dessen Herstellung
Objet moulé revêtu de plastique et son procédé d'obtention

(30) Priority: 31.05.1990 JP 142661/90; 27.03.1991 JP 87474/91
(43) Date of publication of application: 02.01.1992
(73) Proprietor: NIPPON SHEET GLASS CO. LTD., Chuo-ku Osaka-shi Osaka-fu (JP)
(72) Inventor: Takigawa, Akio, Nishinomiya-shi, Hyogo 662 (JP); Hirayama, Naoto, Takarazuka-shi, Hyogo 665 (JP); Kitaoka, Masaki, Toyonaka-shi, Osaka 560 (JP)
(74) Representative: Cresswell, Thomas Anthony

(56) References cited:
- EP-A- 0 339 257
- DE-A- 3 034 524
- GB-A- 2 018 622
- DATABASE WPIL Week 9114, Derwent Publications Ltd., London, GB; AN 91-098249
- DATABASE WPIL Week 8941, Derwent Publications Ltd., London, GB; AN 89-295806
- PATENT ABSTRACTS OF JAPAN vol. 14, no. 174 (M-959)5 April 1990
- PATENT ABSTRACTS OF JAPAN vol. 11, no. 307 (C-450)7 October 1987

## Description

### Detailed Description of the Invention:

This invention relates to coated plastic molded articles and processes for their preparation. More specifically, the invention relates to plastic molded articles with improved surface properties such as abrasion resistance, weatherability, chemical resistance and imperviousness to water, and processes for preparing such articles.

Generally, plastics excel in transparency, light weight, processability and impact strength but show poor abrasion resistance and solvent resistance. Hence surfaces of plastic articles are easily injured and damaged by organic solvents. Furthermore, they have a defect of insufficient weatherability and are apt to be discolored and turn yellow in color.

With the view to improve these shortcomings, various surface-modifying coatings and modifying methods have been proposed.

Japanese Laid-open (Kokai) Patent Publication Nos. 196237/1983 and 78240/1984 propose coated polycarbnate molded articles with improved abrasion resistane, which are prepared by applying onto a polycarbnate surface an undercoater containing a thermoplastic or thermosetting acrylic polymer, curing the same and thereafter coating said surface with a composition containing a partially hydrolyzed condensate of alkyltrialkoxysilane or colloidal silica-containing organopolysiloxane, and curing the same to let it serve as the top coating layer.

However, the above polycarbonate molded articles are still insufficient in resistance to abrasion and solvents compared to inorganic materials Neither they show sufficient water-intercepting property, viz., prevention of water permeation which is one of the degradation factors of such articles in weatherability tests such as outdoor exposure test.

On the other hand, Japanese Patent Publication No. 8098/1986 and Japanese Laid-open Patent Publication No. 32133/1990 propose coating compositions and articles treated therewith, in which a coating containing a polyfunctional acrylic compound is applied onto plastic surfaces and then cured with irradiation of actinic rays.

Japanese Laid-open (Kokai) Patent Publications Nos. 1756/1983, 49036/1985, 11665/1990, 163134/1990 and 173163/1990 disclose coating compositions containing a polyfunctional acrylic compound and silica sol, or a polyfunctional acrylic compound, silica sol and silylacrylate; or plastic coated articles on the surfaces of which the coating compositions are cured with irradiation of actinic rays.

The coated articles prepared by applying a coating containing a polyfunctional acrylic compound on a plastic substrate and then curing the same with irradiation of actinic rays do exhibit improved resistanoe properties to abrasion and solvents, which however are yet insufficient compared to inorganic materials. Furthermore, water-intercepting ability, viz., prevention of water permeation which is one of the degradation factors of such articles in weatherability tests such as outdoor exposure test, is insufficient.

Japanese Laid-open International Patent Publication Nos. 500894/1980 and 500980/1980 disclose polycarbnate articles which are coated with an undercoating layer composed of a photoreactive product of polyfunctional acrylic monomer, a thin silicon dioxide-containing layer being vacuum evaporated on the undercoating layer. For practicing the vacuum evaporation method proposed in those International Applications, however, a vacuum-type apparatus is required for forming the silicon dioxide coating, and furthermore, it is difficult to form a uniform coating on surface of a plastic molded article of large size or that with uneven surface.

For forming silicon dioxide coating film, besides above-described vacuum evaporation method or sputtering method, Japanese Laid-open (Kokai) Patent Publication No. 258480/1985 proposes a process comprising immersing a substrate material in an aqueous hydrosilicofluoric acid supersaturated with silicon dioxide to form a silicon dioxide coating film on the substrate surface. (This method is hereinafter referred to as "precipitation method".)

Japanese Laid-open (Kokai) Patent Publication No. 12734/1986 discloses a process for forming silicon dioxide film on plastic molded articles by the precipitation method, which comprises coating a plastic molded article with a silicon compound such as an organoslicon compound, hydrolyzate thereof and colloidal silica, curing the same to form a primary coating, and thereafter forming a silicon dioxide coating on said primary coating by the precipitation method.

According to this process, plastic molded articles coated with abrasion-resistant, solvent-resistant and water-impermeable silicon dioxide film can be obtained, but the process still involves the problems to be solved, such as insufficient reproducibility in transparency and adhesion of the silicon dioxide coating so formed. That is, it is general that in cases of coating a silicon dioxide film on a surface of a plastic molded article directly by the precipitation method, the resultant silicon oxide film shows weak adhesion and is not uniform, because aqueous hydrosilicofluoric acid solution has low reactivity with plastics and poor wettability. On the other hand, if the plastic molded article is coated in advance with an organosilicon compound and cured, the silanol groups which are present on the surface provide anchoring sites with the silicon component in the aqueous hydrosilicofluoric acid solution, and hence, it is possible to improve adhesion and unevenness of silicon dioxide film obtained by the precipitation method. However, when silicon dioxide coating is formed on a film prepared by coating and curing a partially hydrolyzed product of silicon compound as above, by the precipitation method, the reproducibility in uniformity and adhesion of the silicon dioxide coating is insufficient.

An object of the present invention is to provide novel coated plastic molded articles.

A further object of the present invention is to provide coated plastic molded articles with improved abrasion resistance, weatherability, chemical resistance and imperviousness to water.

Still another object of the present invention is to provide a process for manufacturing the coated plastic molded articles of the present invention with excellent reproducibility and industrial advantages.

Other objects and advantages of the present invention will become apparent from the following description.

According to the present invention, above objects and advantages can be achieved first by a coated plastic molded article composed of a plastic article on the surface of which laminated are:
(a) a first layer composed of a cured composition containing a partially hydrolyzed product of at least one silicon compound which is represented by the following formula (1):

   R¹Si(R²)₃ (1)

   wherein R¹ is a C₁-C₆ hydrocarbon group, an epoxy group-containing organic group or a fluorine atom-containing organic group, and
   R² is selected from the group consisting of alkoxy, alkoxyalkoxy and acetoxy groups and chlorine atom, provided with the three R²'s may be the same or different,
(b) a second layer composed of a cured, partially hydrolyzed product of at least one silicon compound which is represented by the following formula (2):

   (R³)ₙSi(R⁴)₄₋ₙ (2)

   wherein R³ is an acryloxy group-containing organic group, a methacryloxy group-containing organic group, an amino group-containing organic group or a chlorine-containing organic group,
   R⁴ is selected from the group consisting of alkoxy, alkoxyalkoxy and acetoxy groups, and n is 0(zero) or 1,
   and
(c) a third layer composed of the silicon dioxide from an aqueous hydrosilicofluoric acid solution supersaturated with silicon dioxide, by the order of (a), (b) and (c).

The first layer (a) of the coated plastic molded article of the present invention is composed of a cured composition containing a partially hydrolyzed product of at least one silicon compound of the formula (1).

In said formula (1), R¹ is a C₁-C₆ hydrocarbon group, an epoxy group- or fluorine atom-containing organic group.

Preferred examples of R¹ are methyl, ethyl, n-propyl, iso-propyl, n-butyl, n-pentyl, n-hexyl, vinyl, propenyl, γ-glycidoxypropyl and trifluoropropyl

R² in the formula (1) is selected from the group consisting of alkoxy, alkoxyalkoxy and acetoxy groups and chlorine atom. The alkoxy moiety of the alkoxy or alkoxyalkoxy group preferably contains 1 to 4 carbon atoms. As the alkoxy groups, for example, methoxy, ethoxy, propoxy and butoxy may be given. As the alkoxyalkoxy groups, for example, methoxyethoxy, ethoxyethoxy and methoxypropoxy may be given.

The three R²'s in the general formula (1) may be the same or different.

The silicon compounds represented by the formula (1) include, for example, methyltrimethoxysilane, ethyltrimethoxysilane, phenyltrimethoxysilane, vinyltri(methoxyethoxy)silane, γ-glycidoxypropyltrimethoxysilane and γ-trifluoropropyltrimethoxysilane.

The first layer (a) composed of a cured film provided by curing a composition containing a partially hydrolyzed product of such a silicon compound or compounds may further contain an oxide of a metal such as silicon, titanium, tin, antimony, zinc and the like. The amoumt of these metal oxides is preferably 1 to 100 parts by weight, more preferably 3 to 100 parts by weight, calculated as R¹SiO_{1.5}, based on 100 parts by weight of the silicon compound of the formula (1).

The first layer (a) preferably has a thickness ranging from 1 to 10 µm, more preferably from 2 to 5 µm. This first layer (a) contributes to improve surface properties of the coated plastic molded articles of the present invention, such as abrasion resistance and weatherability, in cooperation with the second and third layers which are described later.

The first layer (a) may be provided directly on the surface of the plastic molded article, or may be intervened by an adhesive layer (d). The adhesive layer (d) strengthens the adhesion between the plastic molded article and the first layer (a).

The adhesive layer (d) preferably is a layer containing, for example, an acrylic or methacrylic polymer. Such (meth)acrylic polymer may be any of a thermoplastic polymer, a thermoset polymer or a polymer cured with irradiation of actinic rays. Examples of such (meth)acrylic polymer include (meth)acrylic polymers having no functional group such as polyalkyl (meth)acrylate; (meth)acrylic polymers having functional groups such as hydroxyl, epoxy, alkoxysilyl, amino, carboxyl and mercapto; and (meth)acrylic polymers formed by curing polyfunctional (meth)acrylic monomers with actinic radiation.

If necessary, the adhesive layer (d) may contain a crosslinking agent, ultraviolet absorbent, antioxidant or heat-stabilizer, as required.

The adhesive layer (d) has a thickness preferably ranging from 0.1 to 20 µm, more preferably from 1 to 5 µm. Presence of the adhesive layer (d) is particularly advantageous when the substrate is a polycarbonate molded article.

The second layer (b) in the coated plastic molded article of the present invention is composed of a cured partially hydrolyzed product of at least one silicon compound represented by the formula (2).

In said formula (2), R³ is an organic group containing acryloxy, methacryloxy or amino moiety or chlorine atom. Preferred examples include acryloxylropyl, methacryloxypropyl, aminopropyl and chloropropyl groups.

In said formula (2), R⁴ is selected from the group consisting of alkoxy, alkoxyalkoxy and acetoxy groups. To those alkoxy and alkoxyalkoxy groups, the description given as to the formula (1) is perfectly applicable.

In the formula (2), n stands for 0 or 1. The four R⁴'s when n is 0, or the three R⁴'s when n is 1, may be the same or different.

Examples of the silicon compounds of the formula (2) include tetramethoxysilane, tetraethoxysilane, tetraacetoxysilane, γ-methacryloxypropyltrimethoxysilane, γ-acryloxypropyltrimethoxysilane, γ-aminopropyltrimethoxysilane and γ-chloropropyl trimethoxysilane.

Hydrolyzates of such silicon compounds include those of the silicon compounds represented by the general formula (2) in which a part or whole of their alkoxy, alkoxyalkoxy and acetoxy groups are substituted with hydroxyl groups, and those in which the substituted hydroxy groups are partially condensed spontaneously. Such hydrolyzates can be readily obtained by, for example, hydrolyzing the silicon compounds in a mixed solvent such as water-alcohol mixture in the presence of an acid. These hydrolyzates may be used either singly or in combination of two or more. In case of the concurrent use, it is preferred to use a co-hydrolyzate of a mixture of two or more of the silicon compounds of the general formula (2).

The second layer (b) improves the film-forming property of the third layer (c) which is formed thereon. That is, when a plastic molded article, on which the third layer (c) alone is formed with omission of the second layer (b), and a sheet glass substrate are simultaneously coated with silicon dioxide by the precipitation method, the silicon dioxide film formed on the plastic molded article tends to have a less thickness than that on the sheet glass substrate, or to show less uniform film quality. Formation of the second layer renders the surface of the plastic molded article before the silicon dioxide coating by the precipitation method closely resembling to the glass surface, to remove the above drawbacks. The above intended effect can never be obtained unless a cured, partially hydrolyzed product of the silicon compound(s) of the general formula (2) is used.

The second layer (b) preferably has a thickness ranging from about 1 to 100 nm, more preferably from about 3 to 10 nm. Too high a thickness is apt to cause occurrence of cracks and therefore should be avoided.

The third layer (c) of the coated plastic molded articles of the present invention is composed of the silicon dioxide from an aqueous hydrosilicofluoric acid solution supersaturated with silicon dioxide.

The third layer (c) can be readily formed by applying the aqueous hydrosilicofluoric acid solution onto the second layer (b), as is later described in detail.

The third layer (c) preferably has a thickness ranging from 30 to 3,000 nm, more preferably from 50 to 500 nm.

Plastic molded articles which are used as substrate for the coated plastic molded articles of the present invention can be made of, for example, polycarbnate, diethylene glycol bis-allylcarbonate polymer, acrylic resin and polyester resin.

According to the present invention, such coated plastic molded articles of the present invention can be advantageously prepared by a process of the present invention which comprises
(1) preparing a plastic molded article optionally having an adhesive layer (d) on its surface,
(2) applying onto said surface a first coating composition containing a partially hydrolyzed product of at least one of the silicon compounds represented by the formula (1), and curing the same, to form a first layer,
(3) applying onto the surface of said first layer a second coating containing a partially hydrolyzed product of at least one of the silicon compounds represented by the formula (2) and curing the same, to form a second layer
   and
(4) applying onto the surface of said second layer an aqueous hydrosilicofluoric acid solution supersaturated with silicon dioxide, to form a third layer composed of silicon dioxide.

In above step (1) of the process of the present invention, a plastic molded article is prepared, which may have on its surface an adhesive layer (d).

A plastic molded article having an adhesive layer (d) can be obtained by applying onto a plastic article substrate an adhesive such as a coating containing acrylic polymer, methacrylic polymer, acrylic monomer, methacrylic monomer, acrylic oligomer or methacrylic oligomer, by such means as dipping, spraying, roller coating, flow-coating, spin-coating, etc. followed by heating or irradiation with actinic rays. So obtained adhesive layer serves to promote adhesion of the first layer (a), which is formed by curing a coating containing a partially hydrolyzed product of at least one silicon compound of the formula (1), onto the plastic article substrate. As already stated, the thickness of the adhesive layer preferably ranges from 0.1 to 20 µm, more preferably from 1 to 5 µm.

In the subsequent step (2) a first coating containing a partially hydrolyzed product of at least one silicon compound of the formula (1) is applied onto the surface of the plastic molded article which was prepared in the step (1), and cured to form the first layer (a).

The first coating may further contain silicon compound(s) other than those of the formula (1), or various metal oxides such as oxide sols of silicon, titanium, tin, antimony, zinc and the like. For example, coatings containing co-hydrolyzate of methyltrimethoxysilane and colloidal silica or ternary cohydrolyzate of γ-glycidoxypropyltrimethoxysilane, phenyltrlmethoxysilane and antimony pentoxide sol can be used. The first layer (a) can be formed by applying such first coating containing a partially hydrolyzed product of at least one silicon compound of the general formula (1) and, if necessary a curing catalyst, onto the plastic molded article optionally having an adhesive layer, by the similar manner to the application of the adhesive layer, followed by heating at, e.g., 120°C for curing the coating. As described above, the first layer preferably has a thickness ranging from 1 to 10 µm, more preferably from 2 to 5 µm. This first layer (a) is necessary for improving abrasion resistance and weatherability of the plastic molded article coated with later-described second layer (b) and third layer (c).

In the step (3), a second coating containing a partially hydrolyzed product of at least one silicon compound of the formula (2) is applied onto the surface of the first layer (a,) and cured to form a second layer (b). This second layer (b) assists subsequent formation of a strongly adhesive and uniform silicon dioxide coating, viz., a third layer (c), thereon

The second coating contains the partially hydrolyzed product of at least one silicon compound of the formula (2) preferably at a concentration of at least 10⁻³ mol/liter, calculated as RₙSiO_{(4-n)/2}. When said concentration is lower than 10⁻³ mol/liter, it becomes difficult to achieve the intended effect of the second layer (b).

The second layer (b) excelling in durability and adhesion can be obtained by applying onto the first layer (a) the second coating in the similar manner to the application of the adhesive layer (d), and thereafter drying and curing the coating at temperatures not lower than 40°C but not higher than the deformation temperature of the substrate.

The minimum thickness of so obtained second layer (b) is approximately 5 nm, when measured by a method of laminating the layer (b) plural times on a sheet glass substrate under identical conditions and calculating the thickness per single layer. Whereas, the maximum thickness of the second layer (b) is about 100 nm. thickness exceeding this maximum value is not desirable because such renders occurrence of cracks easier.

Finally in the step (4), an aqueous hydrosilicofluoric acid solution supersaturated with silicon dioxide is applied onto the surface of the second layer (b) to form a third layer (c) composed of silicon dioxide.

Such aqueous hydrosilicofluoric acid solution supersaturated with silicon dioxide (hereafter referred to as "treating solution") can be prepared by dissolving silicon dioxide (silica gel, aerosil, silica glass or other silicon dioxide-containing material) in an aqueous hydrosilicofluoric acid solution, and thereafter bringing about supersaturation with silicon dioxide by such means as adding water or a reagent (boric acid, aluminum chloride, aluminum metal, etc.) or raising the temperature of the treating solution.

As the treating solution, those containing the solute at a concentration ranging from 1 to 4 mol/liter are preferred. Those prepared by saturating an aqueous hydrosilicofluoric acid solution containing the solute at a concentration higher than 3 mol/liter with silicon dioxide and then diluting the same with water to make the concentration to 1 to 4 mol/liter are especially preferred, because they give high film-forming rate to allow efficient coating operation. So formed coating preferably has a thickness ranging from 50 to 500 nm.

It is also preferred that the treating solution
(i) (1) be continuously added and mixed with an aqueous solution of additives such as boric acid, aluminum chloride, etc., and (2) contain a metal such as aluminum dissolved therein and mixed, and (3) be constantly maintained at the supersaturated condition, by such means as temporarily lowering the temperature to bring about saturation of silicon dioxide and then again raising the temperature, even during the contact with the molded article, and
(ii) that at least 3 % per minute of the total amount of the treating solution be filtered and returned to the system.

Such continuous addition and mixing of an aqueous solution of boric acid or the like (1) and dissolving and mixing a metal such as aluminum (2) during the contact with the molded article contribute to improve the film-forming rate. Boric acid is added preferably in an amount ranging from 5 x 10⁻⁴ mol/hr to 1 x 10⁻³ mol/hr, per mol of hydrosilicofluoric acid in the treating solution. Aluminum metal is dissolved preferably in an amount ranging from 1 x 10⁻³ mol/hr to 4 x 10⁻³ mol/hr, per mol of hydrosilicofluoric acid in the treating solution.

The circulation of at least 3 % of the treating solution is effective for continuously obtaining the coating of uniform quality, and filtration of the treating solution through a filter is desirable for obtaining the coating free of surface unevenness.

When the molded articles are dipped in a tank filled with the treating solution, it is effective for achieving an even and uniform coating to let flow the treating solution on the surfaces of the molded articles as a laminar flow.

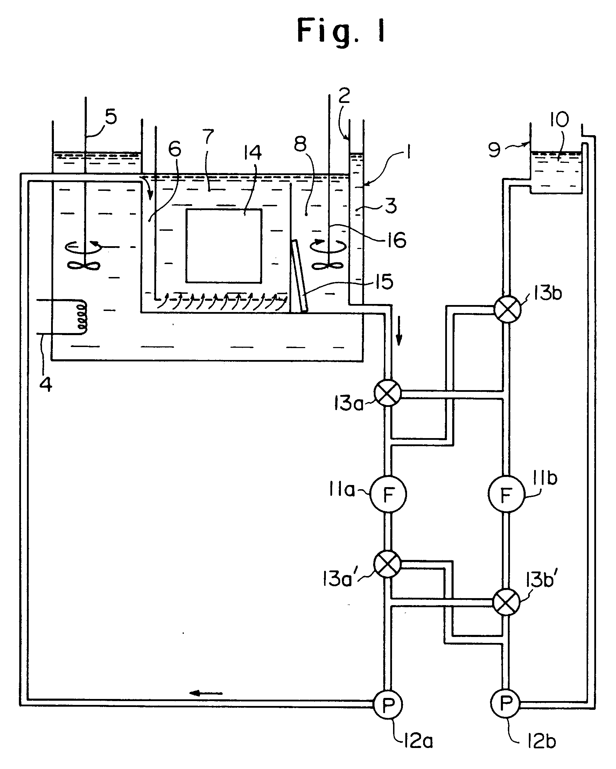

Fig. 1 shows a system diagram of a silicon dioxide coating apparatus used for practicing the subject process.

Referring to Fig. 1, a dipping tank is composed of an outer tank 1 and an inner tank 2. The space between said tanks 1 and 2 is filled with water 3 which is heated with a heater 4 to be maintained at a fixed temperature and stirred with a stirrer 5 for uniform temperature distribution.

The inner tank 2 is composed of a front part 6, a central part 7 and a back part 8, and is filled with 6.5 liters of an aqueous hydrosilicofluoric acid solution of a prescribed concentration containing silicon dioxide dissolved to the saturation point. Industrial silica gel powder is used as the source of silicon dioxide supply.

Three-way cocks 13a, 13a', 13b and 13b' are adjusted to actuate a circulation pump 12a, so as to start recirculation of the aqueous solution by pumping up the aqueous solution in the back portion 8 of the inner tank at a fixed rate, filtering the solution through a filter 11a and recirculating it to the inner tank 2.

In this case, the mesh size of the filter 11a is 1.5 µm, and the recirculation rate of the aqueous solution is set to be 520 ml/min. (Because the total amount of the treating solution is 6.5 liters, the circulation flow rate is approximately 8 %/min.)

Then three Al (aluminum) sheets 15 of 50 mm x 50 mm x 3 mm in size are dipped in the back part 8 of the inner tank. Dissolution of the Al sheets is promoted by operating a stirrer 16.

By maintaining the system under this condition for 16-30 hours, the solution is converted to a treating solution having an adequate degree of silicon dioxide saturation, which is capable of forming silicon dioxide film.

When the solution becomes capable of forming silicon dioxide film, particulate silicon dioxide starts to form in the solution, grows and is filtered off at the filter 11a thereby to cause clogging of the filter. This tendency becomes observable at 30-50 hours after addition of Al, which invites reduction in the recirculation rate. In that case, after the solution in the piping and filter 11a is returned to the inner tank 2, the three-way cocks 13a, 13a',13b and 13b' are set to design a circulation route of the solution from the back part 8 of the inner tank → filter 11b → circulation pump 12a → front part 6 of the inner tank. When circulation of the solution is re-started then, the circulation rate recovers to 520 ml/min. again. The mesh size of the filter 11b is 1.5 µm, which is the same as that of the filter 11a.

Then, a circulation pump 12b is actuated under the described condition to circulate a 5 % aqueous hydrosilicofluoric acid solution 10 by the order of a washing liquid tank 9 → filter 11a → circulation pump 12b → the washing liquid tank 9. Thus, the clogged filter 11a can be washed and regenerated.

Following the above sequence of procedures, every the the filter clogging tendency is observed, the three-way cocks 13a, 13a', 13b and 13b' are adjusted to switch between the two filters. In the meantime silicon dioxide coating can be continuously obtained by dipping sheet glass or plastic molded articles coated with various silicon compounds in the central part 7 of the inner tank for a prescribed length of time, for example, 0.5 to 24 hours.

According to the studies of the present inventors, it has been found that when the first layer (a) in the coated plastic molded articles of the present invention is replaced by a polymer layer cured with irradiation of actinic rays (first polymer layer or a hard coating layer), coated plastic molded articles showing similarly excellent surface characteristics such as high abrasion resistance can be obtained.

Accordingly, the present invention also provides a coated plastic molded article having on the surface thereof
(a') a first polymer layer cured with irradiation of actinic rays,
(b) a second layer composed of a cured, partially hydrolyzed product of the silicon compound represented by the formula (2), and
(c) a third layer composed of the silicon dioxide from an aqueous hydrosilicofluoric acid solution supersaturated with silicon dioxide,
as laminated by the order of above (a'), (b) and (c). (This coated plastic article is hereinafter referred to as a "second, coated plastic molded article".)

The first polymer layer (a') of this second coated plastic molded article is a polymer layer cured with irradiation of actinic rays.

As such cured polymer layer, the preferred is a coated film of a polyfunctional acrylate compound which has been cured with irradiation of actinic rays. As useful polyfunctional acrylate compounds, either polyfunctional acrylic compounds per se or those further containing at least one of (1) fine particles of metal oxide, (2) silyl acrylate and (3) silyl methacrylate are preferred.

Suitable polyfunctional acrylic compounds are monomers or oligomers containing at least two acryloyloxy or methacryloyloxy groups per molecule. Examples are polyol acrylates such as neopentylglycol diacrylate, trimethylolpropane triacrylate and pentaerythritol tetramethacrylate; polyester acrylates such as α,ω-tetraacryl-bis-trimethylolpropane tetrahydrophthalate and α,ω-dimethacryl-bis-ethyleneglycol phthalate; urethane acrylates such as reaction products of tolylene diisocyanate, isophorone diisocyanate or the like with 2-hydroxyethyl acrylate, and reaction products of hexanediol with isophorone diisocyanate and 2-hydroxyethyl acrylate; epoxy acrylates such as diacrylate of bisphenol A diglycidylether and trimethylolpropane polyglycidylether polyacrylate; and other polyfunctional acrylates such as spiroglycol diglycidylether diacrylate; silicone acrylate and tris-acryloyloxyethylisocyanurate.

As the fine particles of metal oxides which may be used in the first polymer layer, there are, for example, fine particles of oxides of such metals as silicon, titanium, tin, antimony, cerium, zirconium and zinc. For example, fine particles with diameters ranging from 5-100 nm, or their sols can be used.

As silyl acrylate and silyl methacrylate which may also be used in the first polymer layer, for example, γ-methacryloxypropyl trimethoxysilane, γ-acryloxypropyl trimethoxysilane or the like may be used.

Said at least one component selected from (1) fine particles of metal oxides, (2) silyl acrylate and (3) silyl methacrylate is contained preferably in the amount in total ranging from 5 to 80 % by weight to the polyfunclional acrylic compound.

At the time of forming the first polymer layer, the coating composition may optionally contain the following additional components as necessity demands. That is, monofunctional acrylate and/or methacrylate may be added to impart flexibility and adhesiveress to the crosslinked and cured coating. The amount of these components is preferably from 2 to 50 % by weight based on the sum of the polyfunctional acrylic compound, (1) fine particles of metal oxide, (2) silyl acrylate and (3) silyl methacrylate. Also with the view to improve surface smoothness and reduce frictional resistance of the first polymer layer, addition of a silicon-containing or fluorine-containing surface active agent is desirable.

The first polymer layer (a') preferably has a thickness ranging from 1 to 50 µm, more preferably from 2 to 30 µm.

As for the second layer (b) and third layer (c) in the second coated plastic molded articles, the description given for those in the first coated plastic molded articles of the present invention are perfectly applicable.

According to the present invention, the second coated plastic molded articles of the present invention can be prepared by a process which comprises
(1) preparing a plastic molded article having on its surface a first polymer layer which has been cured with irradiation of actinic rays,
(2) applying onto the surface of said first layer a second coating containing a partially hydrolyzed product of the silicon compound represented by the formula (2), and curing the same, to form a second layer,
   and
(3) applying onto the surface of the second layer an aqueous hydrosilicofluoric acid solution supersaturated with silicon dioxide, to form a third layer composed of silicon dioxide.

In above step (1), a plastic molded article having on its surface a first polymer layer which has been cured with irradiation of actinic rays is prepared.

The first polymer layer can be formed by applying onto the surface of the plastic article substrate a precursor not yet cured and irradiating said surface with an actinic rays. Or, a film which has been cured in advance with irradiation of an actinic rays may be applied onto the surface of said plastic article.

In the occasion of curing by irradiation with actinic rays, if necessary, a photopolymerization initiator is added to the coating composition (the precursor). Specific examples of photopolymerization initiator include carbonyl compounds such as acetophenone, benzophenone, Michler's ketone, benzil, benzoin, benzoinalkylether and benzyldimethylketal; sulfur compounds such as tetramethylthiuram monosulfide and thioxanthone; azo compounds such as azobisisobutyronitrile and azobis-2,4-dimethylvaleronitrile; and peroxide compounds such as benzoyl peroxide and di-tertiary butyl peroxide. These photopolymerization initiators may be used singly or in combination of two or more. Normally the initiator is used in an amount of 0.1 to 5 % by weight to the coating composition.

An organic solvent may further be added to the coating composition for the purpose of improving applicability, uniform film-forming ability or adhesion. Specific examples of such organic solvent include alcohols such as ethanol and isobutyl alcohol; aromatic hydrocarbons such as benzene, toluene and xylene; ketones such as acetone and methyl ethyl ketone; ethers such as dioxane; and ethers such as ethyl acetate. The amount of such an organic solvent to be added is normally 10 to 200 % by weight to the vehicle. The coating composition may further contain other additives such as UV absorber, photostabilizer and antioxidant.

As previously stated, by applying a coating composition for forming the first polymer layer (a') which is to be cured with irradiation of actinic rays, viz., the hard coating film, onto a plastic molded article by such means as dipping, spraying, spin coating, roller coating or flow coating, and after drying, irradiating the surface with actinic rays, a plastic molded article coated with the cured hard film is obtained. When a plastic molded article having the first polymer layer is to be formed by casting, the coating composition is applied onto the inner surface of the casting die by such means as above-mentioned, dried and cured with irradiation of actinic rays to form a cured film in situ. During or after the cast polymerization, the film is transferred onto the cast polymerized plastic substrate to provide a plastic molded article coated with the film (the first polymer layer). As the actinic rays, electron beam, α-ray, β-ray, γ-ray and ultraviolet rays are useful. Economically, ultraviolet irradiation is preferred.

The first polymer layer (a') contributes to improve the abrasion resistance and weatherability of the second coated plastic molded article of the present invention.

As for steps (2) and (3) of this process it should be understood that the description of the corresponding steps given in the first production process are applicable as they are.

Thus, either of two coated plastic molded articles of the present invention exhibits the following excellent properties:
(1) They have the coating far excelling in durability compared to silicon dioxide coating formed on surfaces of plastic molded articles by such means as vacuum evaporation or sputtering.
(2) The second layer improves the film-forming ability of silicon dioxide by the precipitation method to give silicon dioxide coating of superior uniformity. Also the three layers as a whole exhibit excellent transparency.
(3) The construction of the resultant coating including the silicon dioxide film as the top layer improves the defects of plastics such as poor abrasion resistance, scratch resistance, weatherability, chemical resistance and imperviousness to water.

Hereinafter the invention will be explained in further details with reference to the working examples, it being understood that the present invention is in no sense limited by said examples. The parts and percentages in the examples are by weight, unless otherwise specified.

The performance of each coating was evaluated by the following methods.

### Abrasion resistance:

Taber abrasion test was conducted in accordance with ASTM D-1044. The wheel employed was CS-10F, and the load and number of revolution were 500 g and 500 rpm, respectively.

### Adhesion:

A test normally referred to as a cross-cut tape test was conducted. A piece of adhesive cellophane tape was adhered on the coating specimen cross-cut in # form at its surface, and then peeled off. The peeling condition of the cut portion of the coating was evaluated.

### Water absorption:

A test as prescribed in ASTM D-570 was conducted. A test sample was dried at 50°C for 24 hours and thereafter immersed in distilled water for 24 hours. The water absorption was determined from the weight variation before and after the immersion in distilled water.

### EXAMPLE 1

(1) Polymethylmethacrylate (PMMA, a product of Aldrich Co. having a weight average molecular weight of approximately 100,000) was dissolved in 1:1 (by weight) mixed solvent of diacetone alcohol and ethyl cellosole such that the mixture had a solid content of about 10 %. To the mixture solution cyanoacrylate-containing Uvinal N-539 (a product of GAF Co.) was added at a ratio of approximately 20 % to PMMA, to form a coating d-1.
(2) 60 Parts of gamma-glycidoxypropyl trimethoxysilane, 173 parts of methyltrimethoxysilane, 71 parts of colloidal silica (a product of Nissan Chemical Industries, "Snowtex-C", solid content: 20 %) and 190 parts of 0.1N aqueous acetic acid were mixed, and hydrolyzed for 2 hours at 80-85°C under reflux. The solid composition (calculated values) in the resultant solution contained 8.6 % of γ-glycidoxypropyl trimethoxysilane hydrolyzate calculated as 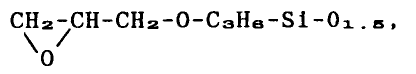 17.3 % of methyltrimethoxysilane hydrolyzate calculated as CH₃SiO_{1.5} and 2.9 % of colloidal silica calculated as SiO₂.
   To 450 parts of thus obtained ternary co-hydrolyzate solution, 42 parts of ethyl cellosolve, 1.0 part of sodium acetate and a minor amount of a flow controlling agent were added to provide a coating a-1.
(3) While mixing 100 parts of tetraethoxysilane with 100 parts of distilled water, 0.5 ml of 0.1N hydrochloric acid was added to the system, followed by 30 minutes' stirring to provide a homogenecous solution. Two (2) parts of this hydrolyzate solution was diluted with 250 ml of isopropyl alcohol to provide a coating b-1 (solid concentration as converted to SiO₂: approx. 1.9 x 10⁻² mol/liter).
(4) Onto an advancely cleaned polycarbonate substrate the coating d-1 was applied and dried for 30 minutes under heating in a hot air oven at 120°C. The formed coating had a thickness of about 2 µm. Then onto the polycarbonate sheet thus coated with an adhesive layer the coating a-1 was applied and dried for an hour in a hot air oven at 120°C to provide a cured coating. Thus formed first layer had a thickness of approximately 3 µm. This dual layer-coated polycarbonate sheet was dipped in the coating b-1 and withdrawn at a rate of 15 cm/min., followed by 30 minutes' drying in a warm air oven at 50°C to form a second layer on said first layer. When ten layers of the second layer were laminated on a sheet glass substrate under identical conditions with those of above operations, the laminated coating had a thickness of about 50 nm. Therefore the second layer formed on the first layer was presumed to have a thickness of about 5 nm.
(5) The resultant polycarbonate sheet on which the adhesive layer, first layer and second layer were laminated by the order stated was immersed, along with a sheet glass substrate, in the central part 7 of the inner tank of the silicon dioxide coating-forming apparatus as illustrated in Fig. 1 and maintained therein for 80 minutes. Thus a silicon dioxide coating was formed on the polycarbonate sheet and the glass substrate. The concentration of the aqueous hydrosilicofluoric acid which was circulated through the apparatus was 2.5 mol/liter, and the heater 4 was so controlled as to maintain the temperature of 35°C. during the film-forming.

When thickness of the coatings on the polycarbnate sheet and glass substrate was measured, it was 100 nm for both. It was confirmed by X-ray photoelectronic spectroscopy (ESCA: Electron Spectroscopy for Chemical Analysis) of the coatings that they were composed mostly of SiO₂.

The coating on the polycarbonate sheet exhibited strong adhesion, showing no peeling off in the prescribed adhesion test. The increase in haze value after the Taber abrasion test of the silicon dioxide-coated polycarbonate sheet was by about 6 % and the water absorption was as low as only about 0.04 %.

### EXAMPLE 2

(1) A mixture of 250 parts of methyl methacrylate, 110 parts of 2-hydroxyethyl methacrylate, 1,450 parts of ethyl cellosolve and a minor amount of an initiator were subjected to polymerization in nitrogen atmosphere under stirring, for about 20 hours at 80°C and for about additional 4 hours at 90°C. After cooling the system to room temperature, 1,000 parts of ethyl cellosolve was added to form a binary copolymer with a solid content of about 13 %. The copolymer had a weight average molecular weight of about 300,000.
   To 80 parts of thus obtained copolymer solution, added were 97 parts of diacetone alcohol and 70 parts of ethyl cellosolve to form a coating d-2.
(2) To a liquid mixture of 110 parts of methyltrimethoxysilane with 2.0 parts of glacial acetic acid, 180 parts of colloidal silica (product of Nissan Chemical Industries, "Snowtex-C", solid content: 20 %) was added, followed by 4 hours' stirring to effect hydrolysis. The solid composition (calculated values) of the resultant solution contained 18.5 % of methyltrimethoxysilane hydrolyzate calculated as CH₃SiO_{1.5} and 12.3 % of colloidal silica calculated as SiO₂.
   To 300 parts of the resultant binary co-hydrolyzate solution, 150 parts of isopropyl alcohol was added and aged for about 4 days at room temperature. Coating a-2 was provided by adding 0.5 part of sodium acetate to the system then.
(3) Two (2) parts of a hydrolyzate solution containing tetraethoxysilane as one of the components (solid concentration: 8 %, "CSGL-0803" manufactured by Chisso K.K.) was dissolved in 400 ml of isopropyl alcohol and 100 ml of 1-butylalcohol to provide a coating b-2 (solid concentration as converted to SiO₂: about 2.7 x 10⁻³ mol/liter).
(4) Through the same operations as the (4) and (5) steps of Example 1 except that the coatings d-2, a-2 and b-2 were used and the concentration of the aqueous hydrosilicofluoric acid used for forming a silicon dioxide coating by the precipitation method was made 3 mol/liter, an advancely cleaned polycarbonate substrate was coated. The silicon dioxide coating was formed on the polycarbonate substrate under such conditions as would form a 100 nm-thick silicon dioxide coating on a sheet glass substrate.

The silicon dioxide film formed on the polycarbonate sheet had a thickness of 100 nm and was transparent and uniform. It exhibited good adhesion and a water absorption of about 0.03 %. The adhesion did not change when the silicon dioxide-coated polycarbenate sheet was immersed in boiling water for one hour.

### EXAMPLE 3

(1) To 900 parts of ethyl cellosolve which was maintained at 85°C in nitrogen atmosphere, a mixture of 480 parts of methyl methacrylate, 120 parts of γ-methacryloxypropyltrimethoxysilane and 3.0 parts of benzoyl peroxide was added over a period of 3 hours. The temperature was then raised to 105°C and maintained for 4 hours, whereby a copolymer having a weight average molecular weight of about 110,000 was obtained.
   160 parts of diacetone alcohol and 150 parts of ethyl cellosolve were added to 80 parts of the obtained copolymer solution to provide a coating d-3.
(2) An advancely cleaned polycarbonate substrate was coated in the similar manner to Example 2, except that the d-2 coating in Example 2 was replaced by d-3 coating. The resultant coated polycarbonate article exhibited favorable properties like the product of Example 2.

### EXAMPLE 4

(1) 50 Parts of ethylene glycol diacrylate, 50 parts of pentaerythritol triacrylate, 2 parts of α,α-diethoxyacetophenone, 5 parts of resorcinol monobenzoate and a minor amount of a silicone-type flow controlling agent were mixed to provide a coating d-4.
(2) The d-4 coating was applied onto an advancely cleaned polycarbonate substrate with a bar coater to a wet coating thickness of about 10 µm, and cured with a UV irradiation for about 1 minute using a 80 W/cm UV lamp in nitrogen atmosphere. Except for the above operation, the operation of Example 1 were repeated. The resultant coated polycarbonate article exhibited equally favorable properties to those of the product of Example 1.

### EXAMPLE 5

Example 2 was repeated except that the polycarbonate substrate sheet was immersed in the treating solution in the central part 7 of the inner tank of the silicon dioxide film-forming apparatus as illustrated in Fig. 1 for 240 minutes. The resultant silicon dioxide coating had a thickness of about 300 nm. The resultant coated polycarbonate article exhibited excellent appearance and the increase in haze value after the Taber abrasion test was by about 5 %. The water absorption was so extremely low as about 0.02 %, which after a 300-hour water immersion test, was only about 0.08 %. When the silicon dioxide-coated polycarbonate sheet was immersed in boiling water for an hour, no change was observed in appearance and adhesion.

### EXAMPLE 6

The coating d-2 was applied onto an advancely cleaned cast plate of acrylic resin and dried under heating at 100°C for 60 minutes in a hot air oven. The thickness of the resultant coating was about 2 µm. Then the coating a-2 was applied onto the adhesive layer-coated acrylic plate, arid dried at 100°C for 2 hours in a hot air oven. Thus cured coating had a thickness of approximately 3 µm. Then the dual layer-coated acrylic plate was immersed in the coating b-2 and withdrawn at a rate of 15 cm/min., followed by 30 minutes' drying at 50°C in a warm air oven. Thus the second layer was formed on the first layer. When ten of the second layers were laminated on a sheet glass substrate under identical conditions with the above, the laminate had a thickness of about 50 nm. Accordingly, the second layer was presumed to have a thickness of about 5 nm. The acrylic plate having the adhesive layer, first layer and second layer laminated thereon by the order stated was immersed, along with a sheet glass substrate, in the central part 7 of the inner tank of the silicon dioxide coating-forming apparatus as illustrated in Fig. 1 and maintained therein for 80 minutes. Thus, a silicon dioxide coating was formed on the acrylic plate and the glass substrate. The concentration of the aqueous hydrosilicofluoric acid solution which was circulated through the apparatus was 2.5 mols/liter, and the heater 4 was adjusted to maintain a temperature of 35°C during the formation of the coating film.

The silicon dioxide coatings formed on the acrylic plate and the glass substrate was both 100 nm in thickness.

The coating formed on the acrylic plate exhibited a high adhesion strength and showed no peeling off during the adhesion test. The increase in haze value of the silicon dioxide-coated acrylic plate after the Taber abrasion test was by about 5 %.

### EXAMPLE 7

Onto an advancely cleaned, acrylic plate formed by extrusion, the coating a-1 was directly applied without an advance formation of an adhesive layer, and dried at 90°C for 3 hours in a hot air oven The thickness of the resultant coating was about 3 µm. The monolayer-coated acrylic plate was treated in the manner similar to Example 6 to form a second layer and a third layer.

The coating obtained on the extruded acrylic plate as above exhibited equivalent performance to that of the coating obtained in Example 6.

### CONTROL 1

Example 1 was repeated except that the formation of the d-1 adhesive layer and the a-1 coating layer was omitted. The resultant dual layer-coated polycarbonate molded article lacking the adhesive layer and the first layer was transparent and exhibited no abnormality in external appearance, but the coating peeling off of the coating occurred during the Taber test. The Taber abrasion hardness was very poor.

### CONTROL 2

Example 2 was repeated except that the formation of the second layer and the third layer composed of silicon dioxide was omitted. The resultant dual layer-coated polycarbonate article was transparent, and had a good external appearance, but its water absorption was about 0.32 %, on approximately the same level to that of untreated polycarbonate plate. The increase in haze value after the Taber abrasion test was by about 9 %.

### CONTROL 3

Example 5 was repeated except that the formation of the b-2 coating was omitted. A part of the silicon dioxide film which was the top layer on the resultant coated polycarbonate article was uneven in flatness. The adhesion of the top layer also was insufficient.

### EXAMPLE 8

Onto the surfaces of an acrylic plate of about 2 mm x 10 cm x 10 cm in size which had been formed by extrusion and cleaned in advance, a UV-curable coating composed of a polyfunctional acrylate compound ("Hardic RC-5001" manufactured by Dainippon Ink and Chemicals, Inc) was applied by a dipping method, and dried at 60°C for 5 minutes. Then, the surface was irradiated with a 80 W/cm ozone type high pressure mercury-vapor lamp for 10 seconds in a nitrogen atmosphere. The distance between the work and the lamp was set to be 15 cm. Thus obtained UV-cured first layer had a thickness of about 7 µm. The acrylic plate on which the first layer was formed was immersed in the coating b-1, and a second layer was formed on the first layer through the operations similar to those in Example 1. The resultant acrylic plate or which the first and second layers were laminated by the order stated was immersed, along with a sheet glass substrate, in the central part 7 of the inner tank of the silicon dioxide film-forming apparatus as illustrated in Fig. 1, and maintained there for 80 minutes to form a silicon dioxide coating (the third layer).

The concentration of the aqueous hydrosilicofluoric acid which was circulated through the silicon dioxide film-forming apparatus was 3 mol/liter. The heater 4 was so adjusted as to maintain the temperature during the film-formation at 35°C.

Both the silicon dioxide coatings formed on the acrylic plate and the glass substrate had a thickness of 100 nm. The coatings were analyzed by X-ray photoelectronic spectroscopy and confirmed to be composed mostly of SiO₂.

The silicon dioxide coating formed on the acrylic plate exhibited strong adhesion proven by no peeling off occurring in the cross-cut tape test. After 20 hours' immersion in 60°C warm water, the silicon dioxide-coated acrylic plate exhibited equally strong adhesion. The increase in haze value of the silicon dioxide-coated acrylic plate after the Taber abrasion test was by about 15 %, and the water absorption was so very low as about 0.05 %. The light transmittance of visible light of the untreated acrylic plate and that of the silicon dioxide-coated product were approximately the same. Thus, it was confirmed that the coating composed of the first, second and third layers little interferes with transmission of visible light, and the coated product was highly transparent.

### EXAMPLE 9

Onto advancely cleaned surface of an acrylic plate formed by extrusion a UV-curable coating composed of a polyfunctional acrylate compound ("Seika Beam PHC-2210", a product of Dainichi Seika K.K.) was applied by a dipping method, and dried at 60°C for 30 seconds, followed by an irradiation with a 80 W/cm ozone type high pressure mercury-vapor lamp for 5 seconds in a nitrogen atmosphere. The distance between the work and the lamp was set to be 15 cm. The resultant UV-cured coating providing the first layer had a thickness of about 3 µm.

The acrylic plate with the first layer formed thereon was then immersed in the coating b-2, and the second layer was formed through the operations similar to those in Example 1.

The acrylic plate on which were the first and second layers were laminated by the order stated was immersed in the central part 7 of the inner tank of the silicon dioxide film-forming apparatus as illustrated in Fig. 1. and maintained there for 100 minutes, whereby an about 120 nm-thick silicon dioxide coating was formed. The concentration of the aqueous hydrosilicofluoric acid which was circulated through the apparatus was 3 mol/liter. The heater 4 was adjusted to maintain the temperature during the film formation at 35°C.

The resultant silicon dioxide-coated acrylic plate exhibited strong adhesion proven by no peeling off occurring in the cross-cut tape test. The adhesion exhibited no change after the coated acrylic plate was immersed in 60°C warm water for 20 hours. The increase in haze value of the silicon dioxide-coated acrylic plate after the Taber abrasion test was by about 12 %, and the water absorption was so very low as about 0.04 %.

### EXAMPLE 10

### Formulation of UV-curable coating:

A mixture of 100 parts of t-butanol, 20 parts of methanol silica sol (a product of Nissan Chemicals, Co.), 3 parts of γ-methacryloxypropyltrimethoxysilane and l part of distilled water was heated and refluxed for about 10 minutes. Then 10 parts of hexanediol diacrylate and 10 parts of trimethylolpropane triacrylate were added thereto. Under a reduced pressure about a half of the solvent was distilled off, and 2 parts of 2,2-diethoxyacetophenone was added to 100 parts of the remaining mixture to provide a UV-curable coating.

Onto advancely cleaned surfaces of a acrylic cast plate, the above-obtained UV-curable coating was applied with a bar coater and dried at 60°C for 30 seconds, followed by an irradiation with a 80 W/cm ozone type high pressure mercury-vapor lamp for 5 seconds in a nitrogen atmosphere. The distance between the work and the lamp was set to be 15 cm. The resultant UV-cured coating as the first layer had a thickness of about 5 µm.

Then a second layer was formed on the first layer in the identical manner with Example 9. The acrylic plate having the first and second layer by the order stated laminated on its surface was immersed in the central part 7 of the inner tank in the silicon dioxide film-forming apparatus as illustrated in Fig. 1, along with a sheet glass substrate, and maintained therein for 70 minutes, whereby a silicon dioxide coating was formed. The concentration of the aqueous hydrosilicofluoric acid which was circulated through the silicon dioxide film-forming apparatus was 3 mol/liter. The heater 4 was adjusted to maintain the film-forming temperature at 35°C. The silicon dioxide coating on the glass substrate had a thickness of about 100 nm.

The resultant silicon dioxide-coated acrylic plate exhibited a strong adhesion that showed no peeling off of the coating during the cross-cut tape test. The increase in haze value of the acrylic plate after the Taber abrasion test was by about 10 %, and the water absorption was so very low as about 0.05 %.

### EXAMPLE 11

On the surface of an acrylic plate (MR-200, a product of Mitsubishi Rayon) which had been coating-treated with irradiation of actinic rays by the transfer process, a second layer was formed in the manner identical with Example 8. Subsequently the silicon dioxide coating was formed in the identical manner with Example 8, except that the concentration of the aqueous hydrosilicofluoric acid used in the precipitation method was changed to 3.5 mol/liter, and the operation was run under the conditions that a 200 nm-thick silicon dioxide coating was formed on a sheet glass substrate. The resultant silicon dioxide-coated acrylic plate was transparent and uniform, which exhibited excellent adhesion and had a water absorption of about 0.05 %. It showed an increase in haze value by about 10 % after the Taber abrasion test.

### CONTROL 4

Example 9 was repeated except that the formation of the UV-cured coating was omitted. The resultant sample had a favorable appearance and low water absorption. The silicon dioxide coating thereon however was peeled off and fell out during the Taber abrasion test. The increase in haze value after the abrasion test was extremely poor, such as about 35 %.

### CONTROL 5

Example 8 was repeated except that the second and third layers were not formed. The resultant acrylic plate coated with the UV-cured film alone showed a high water absorption such as about 0.27 % and an undesirably high ratio of increase in the haze value after the Taber abrasion test, such as by about 40 %.

### EXAMPLE 12

Seika Beam PHC-2210 (a product of Dainichi Seika K.K.) was applied onto advancely cleaned polycarbonate plate by a dipping method, dried at 60°C for about 10 seconds and then irradiated with a 80 W/cm ozone type high pressure mercury-vapor lamp set at a distance of about 10 cm from the work for 5 seconds. The subsequent operations were conducted in the manner identical with Example 9 except that Seika Beam PHC-2210 was replaced by Seika Beam PHC-2201, to provide a sample product.

The resultant silicon dioxide-coated polycarbonate article showed a water absorption and an increase in haze value after the Taber abrasion test, respectively, of about 0.04 % and by about 12 %, showing excellent improvements over those of the untreated polycarbonate plate, which were about 0.3 % and 55 %, respectively.

### CONTROL 6

Example 12 was repeated except that the treatment with CSGL-0803 (a product of Chisso K.K.) was omitted. No formation of a silicon dioxide coating, however, was observed on the UV-cured coating.

### EXAMPLE 13

Example 11 was repeated except that the silicon dioxide film-forming temperature in the precipitation method was set at 40°C, and a silicon dioxide coating was formed on the acrylic plate under such conditions as would form a 100 nm-thick silicon dioxide coating on a sheet glass substrate.

The silicon dioxide coating formed on the acrylic plate had a thickness of 100 nm and was transparent and uniform.

### EXAMPLE 14 and CONTROL 7

The following two different kinds of acrylic plate of 50mm x 50mm x 2mm in size were prepared.
(1) the one coated with a silicon dioxide film (100 nm-thick) by the treatments identical with those of Example 10 (Example 14).
(2) the one with only a single surface coated with a silicon dioxide film (100-nm thick) by the sputtering method (Control 7).

These two samples were left in a thermostat maintained at 60°C and RH 90±5 % for three weeks. Thereafter the samples were examined as to appearance and adhesion.

While the silicon dioxide coating of Control 7 formed by the sputtering method completely peeled off and disappeared, that formed by the precipitation method (the product of Example 14) showed no change in appearance and exhibited a strong adhesion.

### EXAMPLE 15

Example 9 was repeated except that the solution for forming the second layer was prepared as follows. While mixing a system composed of 80 g of tetraethxysilane, 20 g of γ-methacryloxypropyltrimethoxysilane and 100 g of distilled water, 0.5 ml of 0.1N hydrochloric acid was added. A subsequent 30 minutes' stirring formed a homogeneous solution. Two (2) g of this liquid hydrolyzate was diluted with 250 ml of isopropyl alcohol to provide a second layer-forming solution.

The resultant product had a favorable appearance and exhibited the performance equivalent to that of the product of Example 9.

### EXAMPLE 16

Example 8 was repeated except that the tetraethoxysilane used for forming the second layer was replaced by γ-methacryloxypropyltrimethoxysilane. The resultant product had a good appearance equivalent to that of the product of Example 8.

### EXAMPLE 17

A UV-curable coating was applied onto an advancely cleaned, 125 µm-thick polyester film and cured, under identical conditions with those employed in Example 10, to form the first layer.

While mixing 100 g of γ-aminopropyltrimethoxysilane and 100 g of distilled water, 0.5 ml of 0.1N hydrochloric acid was added thereto and stirred for additional 30 minutes to form a homogeneous solution. The resultant hydrolyzate solution (2 g) was diluted with 250 ml of isopropyl alcohol to provide a solution for forming the second layer.

The polyester film coated with the first layer was immersed in the above solution and withdrawn at a rate of 15 cm/min., followed by 30 minutes air drying in a 50°C warm air oven. Thus a second layer was formed on the first layer. Repeating this operation under identical conditions to laminate 10 layers of the second layer on a sheet glass substrate (uncoated) for referential purpose. The laminated coating had a thickness of about 50 nm. Therefore the thickness of the second layer formed on the polyester film was presumed to be about 5 nm.

The polyester film, on which the first and second layers were laminated by the order stated, was immersed in the central part 7 of the inner tank of silicon dioxide film-forming apparatus as illustrated in Fig. 1, along with a sheet glass substrate, and maintained therein for 80 minutes. Thus, a silicon dioxide coating was formed on both said film and glass substrate. The concentration of the aqueous hydrosilicofluoric acid which was circulated through the apparatus was 3.5 mol/liter, and the heater 4 was controlled to maintain the film-forming temperature at 40°C.

When the thickness of the silicon dioxide coatings on the polyester film and the glass substrate was measured, it was 100 nm.

The silicon dioxide coating formed on the polyester film exhibited a strong adhesion that showed no peeling off during the cross-cut tape test. When the silicon dioxide-coated polyester film was immersed in 60 °C warm water for 20 hours, no change in its adhesion was observed.

### EXAMPLE 18

Example 10 was repeated except that the solution for forming the second layer was formulated as follows. While mixing 100 g of γ-chloropropyltrimethoxysilane and 100 g of distilled water, 0.5 ml of 0.1N hydrochloric acid was added to the mixture, followed by 30 minutes' stirring to form a homogeneous solution. Two (2) g of this hydrolyzate solution was diluted with 300 ml of isopropyl alcohol to provide a second layer-forming solution.

The resultant coated product had a good appearance and exhibited the performance equivalent to that of the product of Example 10.

### EXAMPLE 19

(1) While mixing 100 g of γ-aminopropyltrimethoxysilane with 100 g of distilled water, 0.5 ml of 0.1N hydrochloric acid was added to the mixture, and the system was stirred for additional 30 minutes to form a homogeneous solution. Two (2) g of this hydrolyzate solution was diluted with 250 ml of isopropyl alcohol to provide a b-3 coating.
(2) A coating b-4 was formulated in the identical manner with the coating b-3, except that the γ-aminopropyltrimethoxysilane was replaced by γ-methacryloxypropyltrimethoxysilane.
(3) While mixing 100 g of γ-chloropropyltrimethoxysilane with 100 g of distilled water, 0.5 ml of 0.1N hydrochloric acid was added to the mixture, followed by a 30 minutes' stirring to form a homogeneous solution. Two (2) g of this hydrolyzate solution was diluted with 300 ml of isopropyl alcohol to provide a coating b-5.
(4) While mixing 80 g of tetraethoxysilane, 20 g of γ-methacryloxypropyltrimethoxysilane and 100 g of distilled water, 0.5 ml of 0.1N hydrochloric acid was added to the mixture, and the system was stirred for further 30 minutes to form a homogeneous solution. Two (2) g of this hydrolyzate solution was diluted with 250 ml of isopropyl alcohol to provide a coating b-6.
(5) The coating d-3 used in Example 3 was applied onto an advancely cleaned, 125 µm-thick polyester film and dried for 5 minutes at 145°C in a hot air oven. The resultant coating had a thickness of about 2 µm. Then, the coating a-1 was applied onto the adhesive layer-coated polyester film, heated and dried at 145°C for 15 minutes in a hot air oven to effect curing. This first layer coating had a thickness of about 3 µm. Then the dual layer-coated polyester film was immersed in the coating b-3 and withdrawn at a rate of 15 cm/min., followed by a 30 minutes' heating at 50°C in a warm air oven, to form a second layer on the first layer. The resultant polyester film having the adhesive, first and second layers by the order stated laminated thereon was treated in the manner identical with Example 2, whereby a third silicon dioxide layer was formed thereon.

The coating on the polyester film exhibited a strong adhesion showing no coming off in the afore-described adhesion test. Furthermore, the increase in haze value of the silicon dioxide-coated polyester film after the Taber abrasion test was by about 7 %.

### Example 20

The coating a-1 was applied directly to an advancely cleaned diethylene glycol bis-allylcarbonate polymer, without a preceding formation of a d-3 layer, and cured by a 45 minutes' heating at 125°C in a hot air oven. The coating had a thickness of about 3 µm. Then the resultant coated article was immersed in the coating b-4, withdrawn at a rate of 15 cm/min. and dried at 50°C for 30 minutes in a warm air oven to form a second layer on the first layer. The diethylene glycol bis-allylcarbonate polymer having the first and second layers by the order stated laminated thereon was treated in the manner identical with Example l and coated with a silicon dioxide film was formed as the third layer.

Thus obtained coated product had a favorable appearance and a strong adhesion such that the silicon dioxide coating was not at all peeled off in the adhesion test.

### EXAMPLE 21

The coating a-2 was directly applied onto an advancely cleaned acrylic extrusion-molded plate, without a previous application of the coating d-3, and dried and cured by heating at 90°C for 3 hours in a hot air oven. The thickness of the coating was about 3 µm. Then the resultant coated article was immersed in the coating b-5, withdrawn at a rate of 15 cm/min. and dried at 50°C for 30 minutes in a warm air oven to form a second layer on the first layer. The acrylic plate having the first and second layers by the order stated laminated thereon was treated in the manner identical with Example 2 to form a silicon dioxide coating as the third layer.

The resultant article had a favorable appearance and exhibited a strong adhesion proven by no peeling of the coating during the adhesion test. The increase in haze value after the Taber abrasion test was by about 10 %.

### EXAMPLE 22

On an advancely cleaned polycarbonate substrate a layer of the coating d-1 was formed similarly to Example 1. Then, the coating a-2 was applied to the adhesive layer-coated polycarbonate plate and dried and cured in a hot air oven at 120°C for an hour. This coating had a thickness of about 3 µm. Their the resultant dual layer-coated polycarbonate plate was immersed in the coating b-6, withdrawn at a rate of 15 cm/min. and dried in a 50°C warm air oven for 30 minutes to form a second layer on the first layer. The polycarbonate plate having the adhesive layer, first and second layers by the order stated laminated thereon , was treated in the manner identical with Example 2 to form a silicon dioxide film thereon.

The resultant coated product had a favorable appearance and a strong adhesion proven by no peeling of the coating during the adhesion test. The increase in haze value after the Taber abrasion test was by about 6 %, and the water absorption was very little, such as about 0.04 %.

### EXAMPLE 23

(1) Formulation of silicone hard coating solution:
   To a system composed of 39 parts of γ-glycidoxypropyltrimethoxysilane, 29 parts of 3,3,3-trifluorpropyltrimethoxysilane, 110 parts of methyltrimethoxysilane and 75 parts of colloidal silica ("Snowtex-C", solid content 20 %, a product of Nissan Chemical Industries), 100 parts of 0.1N aqueous hydrochloric acid was added and hydrolyzed at 80-85°C for 2 hours under reflux. To 310 parts of the resultant quaternary co-hydrolyzate solution, 49 parts of ethyl cellosolve, 0.9 part of ammonium perchlorate and a minor amount of a flow controlling agent were added to provide a coating a-3.
(2) Example 22 was repeated except that a-2 coating was replaced by the a-3 coating. The resultant coated product had a good appearance and exhibited the performance equivalent to that of the product of Example 22.

## Claims

1. A coated article composed of a plastic molded article on the surface of which are laminated in order;
(a) a first layer composed of a cured composition containing a partially hydrolyzed product of at least one silicon compound of formula (1):
R¹Si(R²)₃ (1)
wherein R¹ is a C₁-C₆ hydrocarbon group, an epoxy group-containing organic group or a fluorine atom-containing organic group, and the three R²'s, which may be same or different, are selected from alkoxy, alkoxyalkoxy, acetoxy and chlorine,
(b) a second layer composed of a cured, partially hydrolyzed product of at least one silicon compound of formula (2):
(R³)ₙSi(R⁴)₄₋ₙ (2)
wherein R³ is an acryloxy group-containing organic group, a methacryloxy group-containing organic group, an amino group-containing organic group or a chlorine-containing organic group, R⁴ is alkoxy, alkoxyalkoxy or acetoxy, and n is 0 (zero) or 1,
and
(c) a third layer composed of silicon dioxide from an aqueous hydrosilicofluoric acid solution supersaturated with silicon dioxide.

2. An article according to claim 1, in which (d) an adhesive layer is present between the first layer (a) and the surface of the plastic molded article.

3. An article according to claim 2, in which the adhesive layer (d) contains an acrylic polymer and/or methacrylic polymer.

4. An article according to claim 1, 2 or 3, in which the plastic molded article is made of polycarbonate. diethylene glycol-bis-allylcarbonate polymer, acrylic resin or polyester resin.

5. A process for preparing a coated plastic molded article as claimed in claim 1 which comprises
(1) optionally providing an adhesive layer (d) on a surface of a plastic molded article,
(2) applying onto said surface or onto adhesive layer (d) when present a first coating containing a partially hydrolyzed product of at least one silicon compound of formula (1), and curing to form said first layer (a),
(3) applying onto the surface of said first layer (a) a second coating containing a partially hydrolyzed product of at least one silicon compound of formula (2) and curing to form said second layer (b), and
(4) applying onto the surface of said second layer (b) an aqueous hydrosilicofluoric acid solution supersaturated with silicon dioxide to form said third layer (c).

6. A process according to claim 5, in which said second coating contains the partially hydrolyzed product of the silicon compound at a concentration of at least 10⁻³ mol/liter, calculated as RₙSiO_{(4-n)/2}.

7. A coated article composed of a plastic molded article having on a surface thereof, in order;
(a') a first polymer layer cured by actinic radiation,
(b) a second layer composed of a cured partially hydrolyzed product of at least one silicon compound of formula (2) as defined in claim 1, and
(c) a third layer composed of silicon dioxide from an aqueous hydrosilicofluoric acid solution supersaturated with silicon dioxide.

8. An article according to claim 7, in which the first layer (a') is formed by curing a polyfunctional acrylate compound with actinic radiation.

9. An article according to claim 7 or 8 in which the plastic molded article is made of polycarbonate, diethylene glycol-bis-allylcarbonate polymer, acrylic resin or polyester resin.

10. A process for preparing a coated plastic molded article as claimed in claim 7 which comprises
(1) curing by actinic radiation a polymer layer on a surface of a plastic molded article to form said first layer (a'),
(2) applying onto the surface of said first layer (a') a second coating containing a partially hydrolyzed product of at least one silicon compound of formula (2), and curing to form said second layer (b), and
(3) applying onto the surface of said second layer (b) an aqueous hydrosilicofluoric acid solution supersaturated with silicon dioxide, to form said third layer (c).

11. A process according to claim 10, in which the first polymer layer is formed by applying an uncured precursor onto the surface of the plastic molded article and curing it by actinic radiation.

12. A process according to claim 10, in which the first polymer layer is formed by applying a film which has been cured by actinic radiation onto the surface of the plastic molded article.

13. A process according to claim 10, 11 or 12, in which the second coating contains the partially hydrolyzed product of the silicon compound at a concentration of at least 10⁻³ mol/liter, calculated as RₙSiO_{(4-n)/2}.

## Patentansprüche

1. Überzogener Gegenstand, enthaltend einen Kunststoff-Formkörper, auf dessen Oberflache in der angegebenen Reihenfolge laminiert sind
(a) eine erste Schicht, enthaltend eine gehärtete Masse, enthaltend ein partiell hydrolysiertes Produkt mindestens einer Siliciumverbindung der Formel (1):
R¹Si(R²)₃ (1)
in der R¹ eine C₁-C₆-Kohlenwasserstoffgruppe, eine eine Epoxygruppe enthaltende organische Gruppe oder eine ein Fluoratom enthaltende organische Gruppe ist und die drei Reste R², die gleich oder verschieden sein können, ausgewählt sind aus Alkoxy, Alkoxyalkoxy, Acetoxy und Chlor,
(b) eine zweite Schicht, enthaltend ein gehärtetes partiell hydrolysiertes Produkt mindestens einer Siliciumverbindung der Formel (2):
(R³)ₙSi(R⁴)₄₋ₙ (2)
in der R³ eine eine Acryloxygruppe enthaltende organische Gruppe, eine eine Methacryloxygruppe enthaltende organische Gruppe, eine eine Aminogruppe enthaltende organische Gruppe oder eine Chlor enthaltende organische Gruppe ist, R⁴ Alkoxy, Alkoxyalkoxy oder Acetoxy ist und n 0 oder 1 ist,
und
(c) eine dritte Schicht, enthaltend Siliciumdioxid aus einer wäßrigen Fluorkieselsäurelösung, die mit Siliciumdioxid übersättigt ist.

2. Gegenstand nach Anspruch 1, wobei (d) eine Klebemittelschicht zwischen der ersten Schicht (a) und der Oberfläche des Kunststoff-Formkörpers vorhanden ist.

3. Gegenstand nach Anspruch 2, wobei die Klebemittelschicht (d) ein Acrylpolymer und/oder ein Methacrylpolymer enthält.

4. Gegenstand nach Anspruch 1, 2 oder 3, wobei der Kunststoff-Formkörper aus Polycarbonat, Diethylenglykol-bis-allylcarbonat-Polymer, Acrylharz oder einem Polyesterharz hergestellt ist.

5. Verfahren zur Herstellung eines überzogenen Kunststoff-Formkörpers nach Anspruch 1, umfassend
(1) gegebenenfalls Aufbringen einer Klebemittelschicht (d) auf eine Oberfläche eines Kunststoff-Formkörpers,
(2) Aufbringen eines ersten Überzugs, enthaltend ein partiell hydrolysiertes Produkt mindestens einer Siliciumverbindung der Formel (1) auf die Oberfläche oder auf die Klebemittelschicht (d), soweit vorhanden, und Härten zur Bildung der ersten Schicht (a),
(3) Aufbringen eines zweiten Überzugs, enthaltend ein partiell hydrolysiertes Produkt mindestens einer Siliciumverbindung der Formel (2) auf die Oberfläche der ersten Schicht (a) und Härten zur Bildung der zweiten Schicht (b), und
(4) Aufbringen einer wäßrigen Fluorkieselsäurelösung, die mit Siliciumdioxid übersättigt ist, auf die Oberfläche der zweiten Schicht (b) zur Bildung der dritten Schicht (c).

6. Verfahren nach Anspruch 5, wobei der zweite Überzug das partiell hydrolysierte Produkt der Siliciumverbindung in einer Konzentration von mindestens 10⁻³ Mol/Liter, berechnet als RₙSiO_{(4-n)/2} enthält.

7. Überzogener Gegenstand, enthaltend einen Kunststoff-Formkörper, der auf einer Oberfläche in der angegebenen Reihenfolge aufweist:
(a') eine erste Polymerschicht, die durch aktinische Strahlung gehärtet ist,
(b) eine zweite Schicht, enthaltend ein gehärtetes partiell hydrolysiertes Produkt mindestens einer Siliciumverbindung der Formel (2), wie in Anspruch 1 definiert, und
(c) eine dritte Schicht, enthaltend Siliciumdioxid aus einer wäßrigen Fluorkieselsäurelösung, die mit Siliciumdioxid übersättigt ist.

8. Gegenstand nach Anspruch 7, wobei die erste Schicht (a') gebildet worden ist durch Härten einer polyfunktionellen Acrylatverbindung mit aktinischer Strahlung.

9. Gegenstand nach Anspruch 7 oder 8, wobei der Kunststoff-Formkörper hergestellt ist aus Polycarbonat, Diethylenglykol-bis-allylcarbonat-Polymer, Acrylharz oder Polyesterharz.

10. Verfahren zur Herstellung eines überzogenen Kunststoff-Formkörpers nach Anspruch 7, umfassend
(1) Härten einer Polymerschicht auf einer Oberfläche eines Kunststoff-Formkörpers durch aktinische Strahlung zur Bildung der ersten Schicht (a'),
(2) Aufbringen eines zweiten Überzugs, enthaltend ein partiell hydrolysiertes Produkt mindestens einer Siliciumverbindung der Formel (2) auf die Oberfläche der ersten Schicht (a') und Härten zur Bildung der zweiten Schicht (b), und
(3) Aufbringen einer wäßrigen Fluorkieselsäurelösung, die mit Siliciumdioxid übersättigt ist, auf die Oberfläche der zweiten Schicht (b) zur Bildung der dritten Schicht (c).

11. Verfahren nach Anspruch 10, wobei die erste Polymerschicht gebildet wird durch Aufbringen eines nicht-gehärteten Vorläufers auf die Oberfläche des Kunststoff-Formkörpers und Härten desselben durch aktinische Strahlung.

12. Verfahren nach Anspruch 10, wobei die erste Polymerschicht gebildet wird durch Aufbringen eines Films, der durch aktinische Strahlung gehärtet worden ist, auf die Oberfläche des Kunststoff-Formkörpers.

13. Verfahren nach Anspruch 10, 11 oder 12, wobei der zweite Überzug das partiell hydrolysierte Produkt der Siliciumverbindung in einer Konzentration von mindestens 10⁻³ Mol/Liter, berechnet als RₙSiO_{(4-n)/2}, enthält.

## Revendications

1. Article revêtu, constitué d'un article moulé en matière plastique sur la surface duquel sont stratifiées dans l'ordre :
(a) une première couche constituée d'une composition durcie contenant un produit issu de l'hydrolyse partielle d'au moins un dérivé du silicium de formule (1) :
R¹Si(R²)₃ (1)
dans laquelle R¹ représente un groupe hydrocarboné en C₁-C₆, un groupe organique contenant un groupe époxy ou un groupe organique contenant un atome de fluor, et les trois groupes R², qui peuvent être identiques ou différents, sont choisis parmi l'atome de chlore, et les groupes alcoxy, alcoxyalcoxy et acétoxy,
(b) une seconde couche constituée d'un produit durci, issu de l'hydrolyse partielle d'au moins un dérivé du silicium de formule (2) :
(R³)ₙSi(R⁴)₄₋ₙ (2)
dans laquelle R³ représente un groupe organique contenant un groupe acryloxy, un groupe organique contenant un groupe méthacryloxy, un groupe organique contenant un groupe amino ou un groupe organique contenant un atome de chlore, R⁴ représente un groupe alcoxy, alcoxyalcoxy ou acétoxy, et n est égal à 0 ou 1,
et
(c) une troisième couche constituée de dioxyde de silicium provenant d'une solution aqueuse d'acide silicofluorhydrique, sursaturée en dioxyde de silicium.

2. Article selon la revendication 1, dans lequel une couche d'adhésif (d) est présente entre la première couche (a) et la surface de l'article moulé en matière plastique.

3. Article selon la revendication 2, dans lequel la couche d'adhésif (d) contient un polymère acrylique et/ou un polymère méthacrylique.

4. Article selon l'une quelconque des revendications 1 à 3, dans lequel l'article moulé en matière plastique est en polycarbonate, en polymère de bis(allylcarbonate) de diéthylèneglycol, en résine acrylique ou en résine de polyester.

5. Procédé de préparation d'un article moulé en matière plastique, revêtu, tel que revendiqué dans la revendication 1, qui comprend les étapes consistant à :
(1) appliquer éventuellement une couche d'adhésif (d) sur une surface d'un article moulé en matière plastique,
(2) appliquer sur ladite surface ou sur la couche d'adhésif (d) lorsqu'elle est présente, un premier revêtement contenant un produit issu de l'hydrolyse partielle d'au moins un dérivé du silicium de formule (1), et faire durcir ledit revêtement pour former ladite première couche (a),
(3) appliquer sur la surface de ladite première couche (a) un second revêtement contenant un produit issu de l'hydrolyse partielle d'au moins un dérivé du silicium de formule (2) et faire durcir ledit revêtement pour former ladite seconde couche (b), et
(4) appliquer sur la surface de ladite seconde couche (b) une solution aqueuse d'acide silicofluorhydrique, sursaturée en dioxyde de silicium, pour former ladite troisième couche (c).

6. Procédé selon la revendication 5, dans lequel ledit second revêtement contient le produit issu de l'hydrolyse partielle du dérivé du silicium à une concentration d'au moins 10⁻³ mole/litre, calculée en RₙSiO_{(4-n)/2}.

7. Article revêtu constitué d'un article moulé en matière plastique portant sur l'une de ses surfaces, dans l'ordre :
(a') une première couche de polymère, durcie par des rayons actiniques,
(b) une seconde couche constituée d'un produit durci, issu de l'hydrolyse partielle d'au moins un dérivé du silicium de formule (2) tel que défini dans la revendication 1, et
(c) une troisième couche constituée de dioxyde de silicium, provenant d'une solution aqueuse d'acide silicofluorhydrique, sursaturée en dioxyde de silicium.

8. Article selon la revendication 7, dans lequel la première couche (a') est formée par durcissement d'un composé acrylate polyfonctionnel par des rayons actiniques.

9. Article selon la revendication 7 ou 8, dans lequel l'article moulé en matière plastique est en polycarbonate, en polymère de bis(allylcarbonate) de diéthylèneglycol, en résine acrylique ou en résine de polyester.

10. Procédé de préparation d'un article moulé en matière plastique, revêtu, tel que revendiqué dans la revendication 7, qui comprend les étapes consistant à :
(1) faire durcir par des rayons actiniques une couche de polymère appliquée sur une surface d'un article moulé en matière plastique, pour former ladite première couche (a'),
(2) appliquer sur la surface de ladite première couche (a') un second revêtement contenant un produit issu de l'hydrolyse partielle d'au moins un dérivé du silicium de formule (2), et faire durcir ledit revêtement pour former ladite seconde couche (b), et
(3) appliquer sur la surface de ladite seconde couche (b) une solution aqueuse d'acide silicofluorhydrique, sursaturée en dioxyde de silicium, pour former ladite troisième couche (c).

11. Procédé selon la revendication 10, dans lequel on forme la première couche de polymère en appliquant un précurseur non-durci sur la surface de l'article moulé en matière plastique et en le faisant durcir par des rayons actiniques.

12. Procédé selon la revendication 10, dans lequel on forme la première couche de polymère en appliquant sur la surface de l'article moulé en matière plastique un film qui a été durci par des rayons actiniques.

13. Procédé selon l'une quelconque des revendications 10 à 12, dans lequel le second revêtement contient le produit issu de l'hydrolyse partielle du dérivé du silicium à une concentration d'au moins 10⁻³ mole/litre, calculée en RₙSiO_{(4-n)/2}.
